# FASCICULE DE BREVET EUROPEEN

(11) **EP 2 745 533 B1**
(45) Date de publication et mention de la délivrance du brevet: **24.02.2016**
(21) Numéro de dépôt: 12769491.7
(22) Date de dépôt: 13.08.2012
(51) Int. Cl.: H04Q 9/00, G01D 4/00

(54) **PROCEDE DE TRANSMISSION POUR TELE-RELEVE DE COMPTEURS DE FLUIDE**
ÜBERTRAGUNGSVERFAHREN ZUR FERNABLESUNG VON DURCHFLUSSMESSERN
TRANSMISSION METHOD FOR REMOTE READING OF FLUID METERS

(30) Priorité: 16.08.2011 FR 1157343
(43) Date de publication de la demande: 25.06.2014
(73) Titulaire: Suez Environnement, 92040 Paris La Defense Cedex (FR)
(72) Inventeur: FARNIER, Eric, F-92500 Rueil Malmaison (FR)
(74) Mandataire: Cabinet Armengaud Aîné
(86) Numéro de dépôt international: PCT/IB2012/054104
(87) Numéro de publication internationale: WO 2013/024416

(56) Documents cités:
- EP-A1- 1 677 270
- EP-A1- 1 962 060
- EP-A1- 1 962 061

## Description

La présente invention est relative à un procédé de transmission pour télé-relève de compteurs de fluide, et plus particulièrement un procédé de transmission de données, utilisable par des modules de communication par radio fréquence, notamment dans le cadre du télé-relevé des compteurs de fluides tels que l'eau, le gaz ou l'électricité, qu'ils soient domestiques ou industriels. Ce procédé de transmission de données pourra également être utilisé dans le cas d'autres capteurs associés aux réseaux de distribution des fluides susmentionnés.

Il existe différents types de systèmes de télé-relève que l'on peut regrouper en deux principales familles.

Un premier type est le télé-relevé itinérant où un élément mobile, qui peut être un releveur à pied ou véhiculé, dispose d'un terminal portable muni d'une interface radio. Lorsqu'il passe à proximité d'un compteur ou d'un groupe de compteurs équipés de modules de communication radio, il récupère le relevé transmis par ces modules sur son terminal portable. Les modules transmettent les relevés des compteurs soit, dans le cas de système bidirectionnel sur interrogation émise par l'interface équipant le terminal du releveur, soit directement dans le cas de système radio unidirectionnel, les modules émettant très fréquemment - par exemple toutes les quelques secondes ou dizaines de secondes.

Ce type de solution de télé-relève utilise généralement une liaison radio de la bande UHF avec une portée limitée à une centaine de mètres maximum, suffisante pour relever le compteur en dehors de la propriété ou du logement.

De par la nécessité de déplacer un agent pour exécuter la relève, cette technique limite la possibilité de suivre en continu les consommations, et de ce fait restreint les impacts sur la réduction des consommations que l'on attend de la mise en place de systèmes de relève « intelligents » dits également « Smartmetering ».

Un second type est le télé-relevé en réseau fixe dans lequel une infrastructure est mise en place afin de permettre de relever automatiquement et très fréquemment, par exemple quotidiennement, les compteurs situés dans un périmètre géographique - ou secteur.

Des concentrateurs de secteur récupèrent en utilisant une liaison VHF les relevés des compteurs et les retransmettent directement vers les serveurs informatiques du système d'information concerné. Cette retransmission se fait généralement via une liaison de télécommunication du type téléphonique ou fibre optique.

Afin d'optimiser la portée, la liaison VHF fonctionne à faible débit de données. Néanmoins du fait de la position enterrée des compteurs, qui se trouvent souvent dans les caves, et de l'environnement urbain, la portée de la liaison VHF ne peut excéder quelques centaines de mètres ce qui oblige à multiplier le nombre de concentrateurs et de liaisons de type téléphonique payantes. Ces points d'accès aux réseaux de télécommunications payants génèrent des coûts importants.

Par ailleurs la multiplication des concentrateurs complexifie le réseau ce qui rend sa maintenance difficile.

Enfin il est difficile de faire évoluer ce type de réseau car la transmission VHF est limitée par le faible débit de données lié notamment aux performances des composants électroniques disponibles pour les fréquences VHF et d'autre part rendu nécessaire par la nécessité d'optimiser la portée. Ce faible débit limite le nombre de compteurs potentiellement raccordés au concentrateur intermédiaire considéré. Par ailleurs dans le cas de solutions autonomes en énergie, on recherchera un temps de transmission le plus court possible, ce qui est contraire à l'emploi d'un débit de données faible et à un nombre de compteurs considérés élevé qui augmente le nombre de données à transmettre.

Le document EP 1 962 061 décrit un procédé de relève de compteurs utilisant la bande de fréquence UHF pour les communications entre les modules et les concentrateurs et la bande VHF entre les concentrateurs.

L'invention a pour but, surtout, de fournir un réseau fixe de communication utilisable notamment pour la télé-relève de compteurs et nécessitant un nombre réduit de points de connexion aux réseaux de télécommunication.

Selon l'invention, un procédé de transmission pour télé-relève de compteurs de fluides est caractérisé en ce qu'un compteur comporte un module apte à transmettre dans la bande de fréquence VHF une trame d'informations de télé-relève destinée à un serveur comportant un récepteur radio apte à recevoir dans la bande de fréquence UHF, procédé selon lequel un concentrateur reçoit la trame d'informations en provenance du module dans la bande de fréquence VHF et transmet ladite trame d'informations dans la bande de fréquence UHF au serveur.

L'invention consiste donc à construire un réseau fixe basé sur des modules radio travaillant dans la bande de fréquence VHF, avec une portée optimisée par l'utilisation d'une fréquence basse et d'un débit de données faible non pénalisant du fait du peu de donnée à transmettre, combinés avec l'emploi de concentrateurs intermédiaires communicants entre eux ou vers un concentrateur principal ou serveur via une liaison dans la bande UHF à grand débit de données.

La bande de fréquence UHF concerne les fréquences supérieures à 310MHz, la bande VHF celles qui sont inférieures à 310MHz.

De préférence, le concentrateur transmet directement la trame d'informations dans la bande de fréquence UHF au serveur.

Selon une variante, le concentrateur transmet la trame d'informations dans la bande de fréquence UHF au serveur par l'intermédiaire d'au moins un autre concentrateur.

Avantageusement les communications entre les modules et les concentrateurs s'effectuent à une fréquence inférieure à 310MHz tandis que les communications entre les concentrateurs et le serveur s'effectuent à une fréquence supérieure à 310MHz.

Les communications entre les modules et les concentrateurs s'effectuent avantageusement à une fréquence de 169MHz ou voisine de 169MHz comprise dans la bande ERMES dédiée aux applications « metering » par la décision européenne 2005/928/EC.

Les communications entre les concentrateurs et le serveur s'effectuent avantageusement dans la bande ISM à une fréquence de 868MHz.

On pourra alors avantageusement combiner un débit de données important à la puissance maximale autorisée de 500mW dans cette bande de fréquence. La propagation des signaux entre ces équipements bénéficie par ailleurs de meilleures conditions d'implantation que dans le cas des compteurs ainsi que d'une plus grande facilité à déployer des antennes très performantes.

Le serveur peut être un concentrateur principal relié à un système d'informations gérant les données de consommation.

La liaison entre le concentrateur principal et le système d'informations peut se faire par les réseaux de télécommunication sans fil, par exemple GSM ou GPRS, ou filaire, par exemple RTC ou fibre optique.

L'invention concerne également un concentrateur comportant un récepteur apte à recevoir dans la bande de fréquence VHF, et un émetteur apte à émettre dans la bande de fréquence UHF, une trame d'informations de télé-relève, ledit concentrateur étant apte à être utilisé selon le procédé de l'invention.

D'autres caractéristiques et avantages de l'invention apparaîtront dans la description qui suit d'un mode de réalisation avec référence au dessin annexé, mais qui n'a aucun caractère limitatif. Sur ce dessin :
Fig. 1 est un schéma illustrant le fonctionnement du procédé selon l'invention, et
Fig. 2 est une représentation schématique d'un concentrateur selon l'invention.

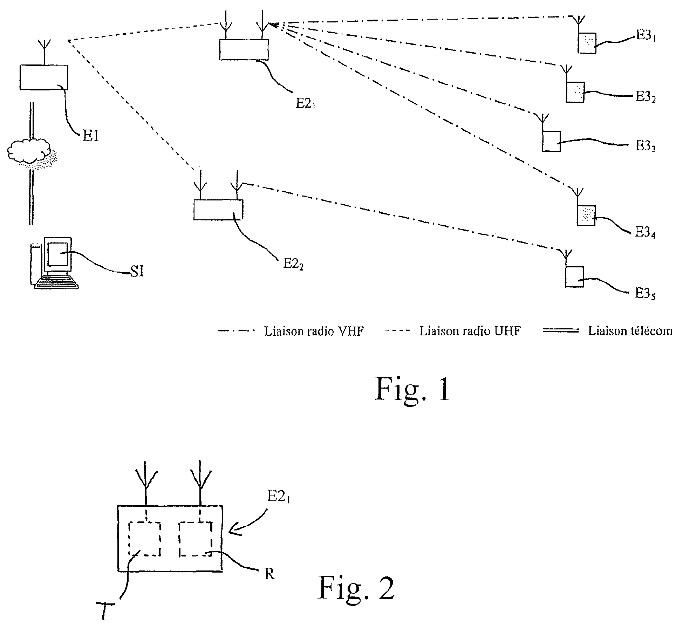

On peut voir sur Fig. 1 que le réseau de télé-relève de compteurs de fluide comporte des modules de communication radio associés à des compteurs E3₁, E3₂, E3₃, E3₄, E3₅, fonctionnant dans une bande de fréquence VHF voisine de 169MHz, avec un débit de données bas de l'ordre de 2.400bps, c'est-à-dire 2400 bits par seconde.

Les modules E3₁, E3₂, E3₃ et E3₄ communiquent de façon unidirectionnelle vers un premier concentrateur E2₁ qui stocke les relevés des compteurs associés aux modules E3₁, E3₂, E3₃ et E3₄. Le module E3₅ communique avec un second concentrateur E2₂ qui stocke les relevés du compteur associé à E3₅.

Les concentrateurs E2₁ et E2₂ communiquent les informations des différents compteurs vers un concentrateur principal E1 ou serveur, de façon bidirectionnelle via une liaison fonctionnant sur une bande UHF de 868MHz avec un débit élevé de l'ordre de 100.000bps.

Chaque concentrateur E2₁ et E2₂ comprend donc un récepteur R pour recevoir dans la bande de fréquence VHF une trame d'informations en provenance d'un module E3₁, E3₂, E3₃, E3₄, E3₅ et un émetteur T pour émettre dans la bande de fréquence UHF, la trame d'informations reçue vers le concentrateur principal E1.

Le concentrateur principal E1 est relié à un système d'Information SI par une liaison de type téléphonie mobile à très haut débit de type GPRS.

Dans cet exemple la liaison bidirectionnelle entre les concentrateurs E2₁ et E2₂ et le concentrateur principal E1 permet de modifier certains paramètres des concentrateurs E2₁ et E2₂ tels que par exemple la périodicité des relevés à transmettre. La liaison bidirectionnelle permet aussi de renouveler les tentatives de transmission en cas d'échec constaté de la transmission. En effet la liaison bidirectionnelle permet de mettre en place un système de rapport de transmission permettant d'informer un concentrateur E2₁, E2₂ qu'une trame de données émise vers le concentrateur principal E1 n'a pas été correctement reçue.

Dans d'autres modes de fonctionnement de l'invention, il est possible de mettre en place une liaison bidirectionnelle entre les modules E3₁, E3₂, E3₃, E3₄ et E3₅ et les concentrateurs E2₁ et E2₂ pour permettre par exemple de commander un organe associé au compteur comme une vanne ou un disjoncteur.

Les applications de cette invention ne sont pas limitées aux applications de comptage, mais peuvent être étendues notamment aux applications de capteurs environnementaux utilisés par les mêmes opérateurs de réseaux de distribution de fluides ou encore à d'autres types de capteurs utilisés dans les réseaux urbains dans le cadre par exemple du pesage de déchets ou de la gestion d'éclairage.

## Revendications

1. Procédé de transmission pour télé-relève de compteurs de fluide **caractérisé en ce qu'**un compteur comporte un module (E3₁), (E3₂), (E3₃), (E3₄), (E3₅) apte à transmettre dans la bande de fréquence VHF une trame d'informations de télé-relève destinée à un serveur (E1) comportant un récepteur radio apte à recevoir dans la bande de fréquence UHF, et **en ce qu'**un concentrateur (E2₁), (E2₂) reçoit la trame d'informations en provenance du module (E3₁), (E3₂), (E3₃), (E3₄), (E3₅) dans la bande de fréquence VHF et transmet ladite trame d'informations dans la bande de fréquence UHF au serveur (E1).

2. Procédé de transmission selon la revendication 1, **caractérisé en ce que** le concentrateur (E2₁), (E2₂) transmet directement la trame d'informations dans la bande de fréquence UHF au serveur (E1).

3. Procédé de transmission selon la revendication 1, **caractérisé en ce que** le concentrateur (E2₁), (E2₂) transmet la trame d'informations dans la bande de fréquence UHF au serveur (E1) par l'intermédiaire d'au moins un autre concentrateur.

4. Procédé de transmission selon l'une quelconque des revendications précédentes, **caractérisé en ce que** les communications entre les modules (E3₁), (E3₂), (E3₃), (E3₄), (E3₅) et les concentrateurs (E2₁), (E2₂) s'effectuent à une fréquence inférieure à 310MHz tandis que les communications entre les concentrateurs (E2₁), (E2₂) et le serveur (E1) s'effectuent à une fréquence supérieure à 310MHz.

5. Procédé de transmission selon l'une quelconque des revendications précédentes, **caractérisé en ce que** les communications entre les modules (E3₁), (E3₂), (E3₃), (E3₄), (E3₅) et les concentrateurs (E2₁), (E2₂) s'effectuent à une fréquence de 169MHz.

6. Procédé de transmission selon l'une quelconque des revendications précédentes, **caractérisé en ce que** les communications entre les concentrateurs (E2₁), (E2₂) et le serveur (E1) s'effectuent à une fréquence

7. Procédé de transmission selon l'une quelconque des revendications précédentes, **caractérisé en ce que** le serveur (E1) est un concentrateur principal relié à un système d'informations (SI) gérant les données de consommation.

8. Procédé de transmission selon la revendication 6, **caractérisé en ce que** la liaison entre le concentrateur principal (E1) et le système d'information (SI) se fait par les réseaux de télécommunication sans fil.

9. Procédé de transmission selon la revendication 6, **caractérisé en ce que** la liaison entre le concentrateur principal (E1) et le système d'information (SI) se fait par les réseaux de télécommunication filaires.

10. Concentrateur (E2₁), (E2₂) comportant un récepteur (R) apte à recevoir dans la bande de fréquence VHF, et un émetteur (T) apte à émettre dans la bande de fréquence UHF, une trame d'informations de télé-relève, ledit concentrateur (E2₁), (E2₂) étant apte à être utilisé selon l'une quelconque des revendications 1 à 9.

## Patentansprüche

1. Übertragungsverfahren für das Fernablesen von Fluidzählern, **dadurch gekennzeichnet, dass** ein Zähler ein Modul (E3₁), (E3₂), (E3₃), (E3₄), (E3₅) aufweist, das geeignet ist, im VHF-Frequenzband einen Fernableseinformationsblock an einen Server (E1) zu senden, der einen Funkempfänger aufweist, welcher geeignet ist, im UHF-Frequenzband zu empfangen, und dass ein Konzentrator (E2₁), (E2₂) den von dem Modul (E3₁), (E3₂), (E3₃), (E3₄), (E3₅) kommenden Informationsblock im VHF-Frequenzband empfängt und den Informationsblock im UHF-Frequenzband an den Server (E1) sendet.

2. Übertragungsverfahren nach Anspruch 1, **dadurch gekennzeichnet, dass** der Konzentrator (E2₁), (E2₂) den Informationsblock im UHF-Frequenzband direkt an den Server (E1) sendet.

3. Übertragungsverfahren nach Anspruch 1, **dadurch gekennzeichnet, dass** der Konzentrator (E2₁), (E2₂) den Informationsblock im UHF-Frequenzband an den Server (E1) über mindestens einen weiteren Konzentrator sendet.

4. Übertragungsverfahren nach einem der vorhergehenden Ansprüche, **dadurch gekennzeichnet, dass** die Kommunikation zwischen den Modulen (E3₁), (E3₂), (E3₃), (E3₄), (E3₅) und den Konzentratoren (E2₁), (E2₂) mit einer Frequenz unter 310 MHz erfolgt, während die Kommunikation zwischen den Konzentratoren (E2₁), (E2₂) und dem Server (E1) mit einer Frequenz über 310 MHz erfolgt.

5. Übertragungsverfahren nach einem der vorhergehenden Ansprüche, **dadurch gekennzeichnet, dass** die Kommunikation zwischen den Modulen (E3₁), (E3₂), (E3₃), (E3₄), (E3₅) und den Konzentratoren (E2₁), (E2₂) mit einer Frequenz von 169 MHz erfolgt.

6. Übertragungsverfahren nach einem der vorhergehenden Ansprüche, **dadurch gekennzeichnet, dass** die Kommunikation zwischen den Konzentratoren (E2₁), (E2₂) und dem Server (E1) mit einer Frequenz von 868 MHz erfolgt.

7. Übertragungsverfahren nach einem der vorhergehenden Ansprüche, **dadurch gekennzeichnet, dass** der Server (E1) ein Hauptkonzentrator ist, der mit einem Informationssystem (SI) verbunden ist, welches die Verbrauchsdaten verwaltet.

8. Übertragungsverfahren nach Anspruch 6, **dadurch gekennzeichnet, dass** die Verbindung zwischen dem Hauptkonzentrator (E1) und dem Informationssystem (SI) über Drahtlostelekommunikationsnetzwerke erfolgt.

9. Übertragungsverfahren nach Anspruch 6, **dadurch gekennzeichnet, dass** die Verbindung zwischen dem Hauptkonzentrator (E1) und dem Informationssystem (SI) über kabelgebundene Telekommunikationsnetzwerke erfolgt.

10. Konzentrator (E2₁), (E2₂) mit einem Empfänger (R), der zum Empfangen eines Fernableseinformationsblocks im VHF-Frequenzband geeignet ist, und einem Sender (T), der zum Senden des Fernableseinformationsblocks im UHF-Frequenzband geeignet ist, wobei der Konzentrator (E2₁), (E2₂) zur Verwendung gemäß einem der Ansprüche 1 bis 9 geeignet ist.

## Claims

1. Transmission method for remote reading of fluid meters, **characterized in that** a meter comprises a module (E3₁), (E3₂), (E3₃), E3₄), (E3₅) able to transmit, in the VHF frequency band, a frame of remote-reading information intended for a server (E1) comprising a radio receiver able to receive in the UHF frequency band, and **in that** a concentrator (E2₁), (E2₂) receives the frame of information arriving from the module (E3₁), (E3₂), (E3₃), E3₄), (E3₅) in the VHF frequency band and transmits said frame of information in the UHF frequency band to the server (E1).

2. Transmission method according to Claim 1, **characterized in that** the concentrator (E2₁), (E2₂) transmits, in the UHF frequency band, the frame of information to the server (E1) directly.

3. Transmission method according to Claim 1, **characterized in that** the concentrator (E2₁), (E2₂) transmits, in the UHF frequency band, the frame of information to the server (E1) via at least one other concentrator.

4. Transmission method according to any one of the preceding claims, **characterized in that** the communications between the modules (E3₁), (E3₂), (E3₃), E3₄), (E3₅) and the concentrators (E2₁), (E2₂) are carried out at a frequency lower than 310 MHz, while the communications between the concentrators (E2₁), (E2₂) and the server (E1) are carried out at a frequency higher than 310 MHz.

5. Transmission method according to any one of the preceding claims, **characterized in that** the communications between the modules (E3₁), (E3₂), (E3₃), E3₄), (E3₅) and the concentrators (E2₁), (E2₂) are carried out at a frequency of 169 MHz.

6. Transmission method according to any one of the preceding claims, **characterized in that** the communications between the concentrators (E2₁), (E2₂) and the server (E1) are carried out at a frequency of 868 MHz.

7. Transmission method according to any one of the preceding claims, **characterized in that** the server (E1) is a main concentrator linked to an information system (SI) managing the consumption data.

8. Transmission method according to Claim 6, **characterized in that** the link between the main concentrator (E1) and the information system (SI) is made via the wireless telecommunication networks.

9. Transmission method according to Claim 6, **characterized in that** the link between the main concentrator (E1) and the information system (SI) is made via the wired telecommunication networks.

10. Concentrator (E2₁), (E2₂) comprising a receiver (R) able to receive, in the VHF frequency band, and an emitter (T) able to emit, in the UHF frequency band, a frame of remote-reading information, said concentrator (E2₁), (E2₂) being able to be used according to any one of Claims 1 to 9.
